# FASCICULE DE BREVET EUROPEEN

(11) **EP 4 106 270 B1**
(45) Date de publication et mention de la délivrance du brevet: **25.03.2026**
(21) Numéro de dépôt: 22179363.1
(22) Date de dépôt: 16.06.2022
(51) Int. Cl.: H04L 9/40

(54) **PROCÉDÉS POUR APPARIER UN APPAREIL ÉLECTRIQUE, SYSTÈMES ASSOCIÉS**
VERFAHREN ZUR PAARWEISEN ZUSAMMENLEGUNG EINES ELEKTRISCHEN GERÄTS UND ENTSPRECHENDE SYSTEME
METHODS FOR COUPLING AN ELECTRICAL APPLIANCE, ASSOCIATED SYSTEMS

(30) Priorité: 17.06.2021 FR 2106434
(43) Date de publication de la demande: 21.12.2022
(73) Titulaire: Schneider Electric Industries SAS, 92500 Rueil-Malmaison (FR)
(72) Inventeur: TIAN, Simon, 38330 SAINT ISMIER (FR); PANUEL, Yves, 38170 SEYSSINET PARISET (FR); LOVATO, Jean-Louis, 38330 BIVIERS (FR)
(74) Mandataire: Lavoix

(56) Documents cités:
- US-A1- 2014 208 387
- US-A1- 2015 223 277

## Description

La présente invention se rapporte à des procédés et des systèmes pour apparier un appareil électrique.

Les installations électriques, telles que les installations de distribution d'électricité, comportent généralement un grand nombre d'appareils électriques assurant des fonctions de mesure, de contrôle, de protection, et bien d'autres encore. Souvent, ces appareils sont capables de communiquer entre eux et/ou avec d'autres appareils au moyen d'une liaison de communication sans fil. Par exemple, on peut utiliser une liaison radio de courte portée de type Bluetooth^{®}.

Ces appareils électriques sont généralement installés dans des emplacements tels que des armoires électriques ou des tableaux électriques, par exemple en étant montés sur des rails de fixation.

Un problème peut se poser lors des phases d'installation ou de maintenance, au cours desquelles il est nécessaire d'apparier un appareil électrique avec un ou plusieurs autres appareils afin d'établir la liaison de communication sans fil.

Dans de nombreuses applications, ces appareils électriques ne comportent pas d'interface de pilotage locale tel qu'un écran ou des boutons. Cela est généralement dû à des exigences de coût et de compacité, qui imposent à ces appareils d'être aussi petits et peu coûteux que possible. Cela est aussi motivé par des exigences de sécurité électrique, car ces appareils peuvent, une fois installés dans une armoire ou un tableau électrique, se trouver très proches de pièces conductrices sous tension électrique. Il n'est pas souhaitable d'imposer à un utilisateur d'appuyer sur un bouton placé aussi près de pièces sous tension.

Le processus d'appariement doit donc être réalisé automatiquement, ou en étant piloté au moyen d'un terminal déporté, tel qu'un smartphone d'un opérateur.

Dans les deux cas, il est nécessaire de pouvoir identifier facilement les appareils électriques, afin qu'ils soient appariés au bon endroit.

Lorsque plusieurs appareils électriques sont installés dans une même armoire ou un même tableau, il peut être long et difficile d'identifier chaque appareil et d'initier son appariement. Il est fréquent que ces appareils ne comportent aucun moyen d'identification tels que des étiquettes. Et quand de tels moyens d'identification sont présents, ils peuvent être illisibles, ou ne pas être à jour et comporter des informations erronées. Le problème est d'autant plus important pour les installations de grande taille comportant un nombre élevé d'appareils.

Il en résulte que les démarches d'appariement sont souvent longues et coûteuses et susceptibles de créer des erreurs préjudiciables au bon fonctionnement des appareils électriques, voire de l'installation dans son ensemble.

Il existe donc un besoin pour des procédés d'appariement améliorés pour apparier des appareils électriques dans une installation électrique.

Les documents US2015/223277A1 et US2014/208387A1 décrivent des systèmes de communication de données par signal optique.

Un aspect de l'invention concerne un procédé pour apparier un premier appareil électrique à un deuxième appareil électrique conforme à la revendication 1.

Grâce à l'invention, les données d'identification du premier appareil électrique sont collectées automatiquement par l'utilisateur en capturant la modulation du signal lumineux de l'indicateur lumineux. L'identification de l'appareil est ainsi facilitée, notamment lorsque le premier appareil électrique est installé aux côtés de multiples autres appareils électriques dans un endroit confiné, tel qu'un tableau électrique ou une armoire électrique. L'identification est donc plus robuste et plus rapide à mettre en place par rapport aux cas connus où les appareils doivent être identifiés manuellement et visuellement par des étiquettes, des codes-barres ou des marquages.

Selon des aspects avantageux mais non obligatoires, un tel procédé d'appariement peut incorporer une ou plusieurs des caractéristiques des revendications dépendantes 2 à 9, prises isolément ou suivant toute combinaison techniquement admissible.

Selon un autre aspect, l'invention concerne un système pour apparier un premier appareil électrique à un deuxième appareil électrique selon la revendication 10.

L'invention sera mieux comprise et d'autres avantages de celle-ci apparaîtront plus clairement à la lumière de la description qui va suivre d'un mode de réalisation d'un procédé d'appariement donnée uniquement à titre d'exemple et faite en référence aux dessins annexés, dans lesquels :
- [Fig 1] la figure 1 représente schématiquement une installation électrique comportant des appareils électriques ;
- [Fig 2] la figure 2 est un schéma synoptique d'un appareil électrique et un terminal de communication mobile ;
- [Fig 3] la figure 3 est un diagramme d'un procédé d'appariement de l'appareil électrique de la figure 2, et
- [Fig 4] la figure 4 est un chronogramme illustrant un exemple de modulation de l'intensité lumineuse émise par l'appareil électrique de la figure 2 au cours du procédé d'appariement.

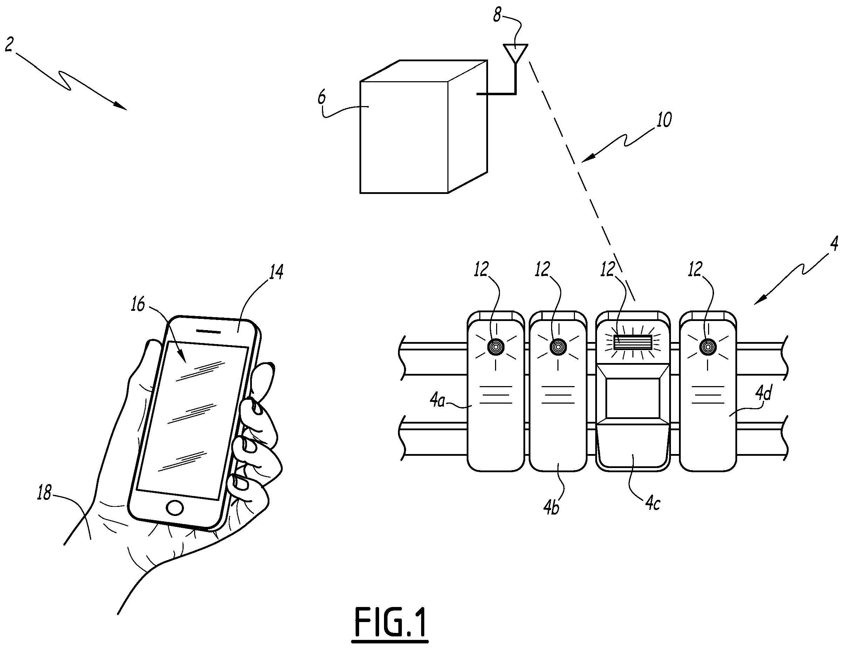

La figure 1 représente schématiquement une installation électrique 2 comportant des appareils électriques 4a, 4b, 4 cet 4d désignés collectivement sous la référence 4.

Par exemple, l'installation 2 est une installation de distribution d'électricité.

Dans de nombreux modes de réalisation, chaque appareil 4 est configuré pour assurer une fonction prédéfinie, telle qu'une fonction de mesure, une fonction de contrôle ou de supervision, une fonction de protection électrique, et bien d'autres encore.

Les appareils 4 peuvent être des appareils de protection électrique, tels que des disjoncteurs, ou des appareils de commutation électrique, tels que des relais ou des contacteurs, ou encore des appareils de mesure configurés notamment pour mesurer une ou plusieurs grandeurs électriques, ou des contrôleurs logiques programmables, ou tout appareil électrique équivalent.

Le nombre d'appareils électriques 4 n'est pas limitatif et en variante, ce nombre pourrait être différent.

Par exemple, les appareils 4 sont installés dans une armoire électrique ou dans un tableau électrique. Au moins une partie des appareils 4 sont disposés les uns à côté des autres, par exemple alignés le long d'un rail de fixation.

L'installation 2 comporte également un autre appareil 6.

Selon des modes de réalisation, l'autre appareil 6 peut être un appareil de communication.

Par exemple, l'appareil 6 peut être configuré pour collecter des données émises par les appareils 4 et pour les traiter et/ou les relayer vers un serveur ou un réseau distant.

Par exemple, l'appareil 6 est un serveur informatique local, ou un concentrateur de données, ou une passerelle.

L'appareil 6 comporte une interface 8 de communication radio permettant d'établir une liaison de communication sans fil 10 avec au moins un des appareils 4.

Par exemple, la liaison de communication 10 est une liaison de communication radio, de préférence une liaison de communication radio de courte portée.

De préférence, la liaison 10 est une liaison radio de type Bluetooth^{®} ou de type Zigbee^{®}, ces exemples n'étant pas limitatifs.

En pratique, pour établir une liaison de communication 10 entre l'appareil 6 et un appareil électrique 4, ledit appareil électrique 4 doit au préalable être apparié à l'appareil 6, comme on le comprendra à la lecture des explications qui vont suivre.

Par exemple, par « apparier », on désigne ici un procédé visant à associer un premier appareil à un deuxième appareil en vue d'établir une liaison de communication sans fil entre ces deux appareils.

Chaque appareil 4 comporte un témoin lumineux 12, ou indicateur lumineux, de préférence installé sur une face avant de l'appareil 4. En variante, le témoin lumineux 12 pourrait être installé sur une autre face, du moment qu'il est visible par un utilisateur lorsque l'appareil 4 est monté dans l'installation 2.

Selon des exemples de réalisation, le témoin lumineux 12 est une lampe, ou une diode électroluminescente, ou toute source lumineuse équivalente. Le témoin lumineux 12 est capable d'émettre de la lumière dans le spectre visible.

Dans de nombreux modes de réalisation, le processeur 22 pilote le témoin lumineux 12 pour émettre un premier signal lumineux indiquant un état de fonctionnement de l'appareil 4.

Par exemple, ces états peuvent indiquer un fonctionnement normal de l'appareil 4, ou un défaut, ou un besoin de maintenance, ou un échange de données par la liaison 10, ou le déroulement d'une mise à jour logicielle, ou différentes étapes d'un procédé d'identification ou d'installation ou d'appariement, ces exemples n'étant pas limitatifs.

Ainsi, lorsque le premier appareil 4 est en fonctionnement, le témoin lumineux 12 peut être allumé, ou éteint, ou clignoter avec une périodicité prédéfinie (par exemple 100ms ou 200ms, la durée d'illumination plus longue que la durée séparant deux illuminations successives, ou inversement, ou ces durées peuvent être égales), cette périodicité pouvant toutefois être modifiée. Le clignotement n'est pas nécessairement régulier et le témoin 12 peut s'illuminer par impulsions successives, par exemple pour indiquer qu'un paquet de communications est émis ou reçu.

Le témoin lumineux 12 peut émettre une lumière avec une couleur spécifique (rouge, vert, jaune, ambré, blanc, bleu, ces exemples n'étant pas limitatifs).

L'appareil 6 peut également établir une liaison de communication avec un terminal 14 d'un utilisateur 18, tel qu'un smartphone, ou une tablette numérique, ou un ordinateur portable, ou tout appareil de communication mobile approprié.

De préférence, le processus d'appariement des appareils 4 avec l'appareil 6 est piloté depuis une interface utilisateur 16 du terminal 14.

Selon des modes de réalisation, l'appareil 6 peut comporter un processeur ou tout circuit électronique de commande équivalent, ce circuit étant notamment programmé pour mettre en œuvre les étapes décrites ci-après.

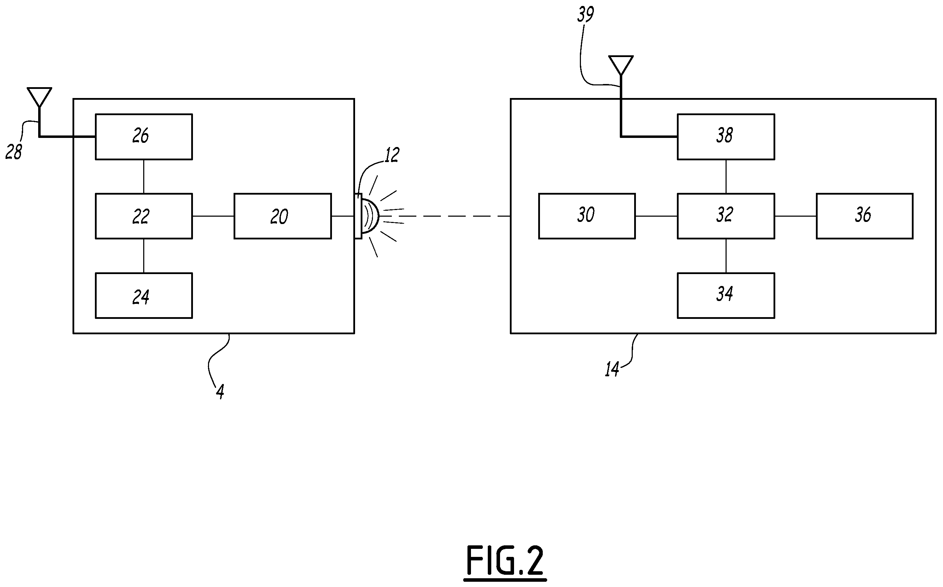

Comme illustré sur la figure 2, chaque appareil 4 comporte le témoin lumineux 12 ainsi qu'un circuit d'alimentation 20 (driver) du témoin lumineux 12.

Par exemple, le circuit d'alimentation 20 est configuré pour piloter le témoin lumineux afin de modifier l'état allumé ou éteint du témoin 12, voire pour changer la longueur d'onde de la lumière émise par le témoin lumineux 12.

Chaque appareil 4 comporte un processeur 22, tel qu'un microcontrôleur, et une mémoire informatique 24 formant un support d'enregistrement de données lisible par ordinateur.

Selon des exemples, la mémoire 24 est une mémoire ROM, ou une mémoire RAM, ou une mémoire non volatile de type EPROM, ou EEPROM, ou FLASH, ou NVRAM, ou une mémoire optique ou une mémoire magnétique.

La mémoire 24 comporte des instructions exécutables et/ou un code logiciel pour mettre en œuvre un procédé d'appariement lorsque ces instructions sont exécutées par le processeur 22. En variante, le procédé peut être implémenté par un ou plusieurs des éléments suivants : un composant logique reprogrammable (FPGA), ou un circuit intégré spécialisé (ASIC), ou tout élément équivalent.

Chaque appareil 4 comporte également une interface de communication radio 26 et une antenne radio 28 pour établir la liaison de communication 10.

Par exemple, le processeur 22 est configuré pour piloter le circuit d'alimentation 20 et l'interface radio 26.

Bien évidemment, chaque appareil 4 peut également comporter un ou plusieurs éléments électriques, ou mécaniques, ou électromécaniques, lui permettant d'assurer sa fonction principale, ces éléments étant conventionnels et n'étant pas décrits dans cette demande.

Selon des modes de réalisation, le terminal de communication 14 comporte une interface homme-machine 16 comprenant par exemple un écran d'affichage. L'interface 16 peut également comporter au moins un dispositif d'acquisition de données tel qu'un ou plusieurs boutons ou interrupteurs, ou un clavier, ou un pointeur, ou un écran tactile, ou un dispositif de connexion à un clavier déporté.

Comme illustré dans l'exemple de la figure 2, le dispositif 14 comporte un capteur optique 30, un processeur 32, une mémoire 34, une interface homme-machine 16 ici implémentée par un écran graphique tactile 36, et une interface de communication radio - 38 comprenant une antenne radio 39. De préférence, le capteur optique 30 est un capteur d'images, tel qu'un capteur CMOS ou CCD.

Par exemple, le terminal 14 est un téléphone portable, ou une tablette numérique, ou un ordinateur, ou tout dispositif équivalent.

Selon des exemples, la mémoire 34 est une mémoire ROM, ou une mémoire RAM, ou une mémoire non volatile de type EPROM, ou EEPROM, ou FLASH, ou NVRAM, ou une mémoire optique ou une mémoire magnétique.

La mémoire 34 forme un support d'enregistrement de données lisible par ordinateur et comporte des instructions exécutables et/ou un code logiciel pour mettre en œuvre un procédé d'appariement lorsque ces instructions sont exécutées par le processeur 32.

Le processeur 32 peut être un microprocesseur ou équivalent. En variante, le procédé peut être implémenté par un ou plusieurs des éléments suivants : un composant logique reprogrammable (FPGA), ou un circuit intégré spécialisé (ASIC), ou tout élément équivalent.

L'interface de communication radio 38 est apte à établir une liaison de communication sans fil avec l'appareil de communication 6 et/ou avec au moins un des appareils électriques 4.

Par exemple, la liaison de communication est une liaison de communication radio, de préférence une liaison de communication radio de courte portée, notamment une liaison du même type que la liaison 10. De préférence, il s'agit d'une liaison radio de type Zigbee ou Bluetooth^{®}, bien que d'autres techniques soient possibles.

L'interface 16 est par exemple configurée pour afficher des données à destination d'un utilisateur du terminal 4 et pour recueillir des données saisies par l'utilisateur. De préférence, il s'agit d'une interface graphique.

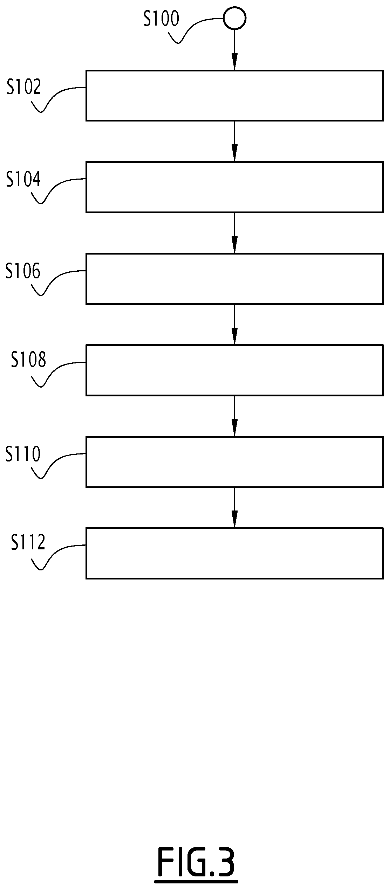

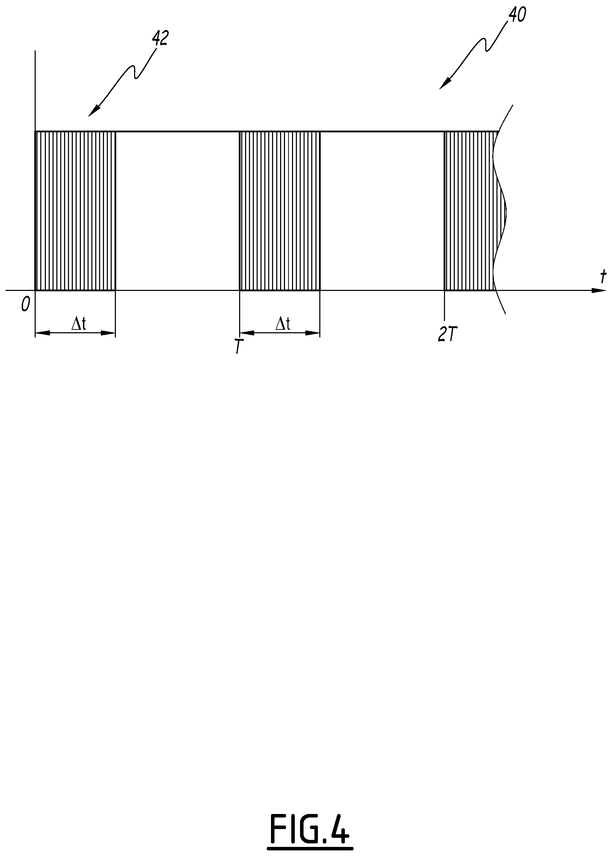

Un exemple de mise en œuvre du procédé d'appariement par un système comportant au moins un appareil 4, l'appareil 6 et un terminal 14 est maintenant décrit en référence aux figures 3 et 4.

D'abord, à l'étape 100, une requête d'appariement est émise pour demander l'appariement d'un appareil électrique 4 à l'appareil de communication 6. Par exemple, la requête peut être envoyée par l'appareil 6 à destination d'un ou plusieurs appareils 4 et peut être générée par l'utilisateur depuis le terminal 4.

Le procédé qui suit est décrit en référence à un seul appareil 4, mais on comprend qu'il peut être généralisé au cas où plusieurs appareils 4 sont actifs simultanément.

En réponse à la requête d'appariement, à l'étape S102, l'appareil électrique 4 émet un message d'identification contenant des données d'identification.

Selon des exemples, les données d'identification peuvent contenir un identifiant numérique ou alphanumérique permettant d'identifier l'appareil de façon unique. Il peut s'agir d'une adresse réseau ou d'un identifiant matériel.

Avantageusement, le message d'identification est émis par clignotement de l'indicateur lumineux 12. Par exemple, ce message d'identification est émis en modulant le signal lumineux par ailleurs envoyé par l'indicateur lumineux 12 lors du fonctionnement normal de l'appareil 4.

De préférence, le message d'identification est émis sans perturber le fonctionnement normal de l'indicateur 12. En d'autres termes, l'émission du message d'identification est imperceptible à l'œil nu par l'utilisateur.

Par exemple, pour envoyer le message d'identification, l'indicateur 12 peut moduler ou clignoter le signal lumineux avec une fréquence de modulation ou de clignotement élevée, par exemple une fréquence plus élevée que la fréquence seuil de perception de l'œil humain, ou, le cas échéant, plus élevée que la fréquence de clignotement utilisée pour indiquer un état de l'appareil 4.

Par exemple, le message d'identification est émis selon un procédé de communication par lumière visible (« visible light communication, ou VLC en anglais).

La figure 4 illustre un exemple d'une séquence 40 de l'état d'illumination (allumé ou éteint) de l'indicateur 12 au cours du temps (noté t, sur l'axe des abscisses).

Dans cet exemple, pour émettre le premier signal lumineux, l'indicateur 12 s'allume par impulsions 42 successives avec une période T. Chaque impulsion 42 a une durée Δt.

Pendant chaque impulsion 42, la lumière émise par l'indicateur 12 est modulée pour émettre le message d'identification. Ainsi, pendant la durée Δt de chaque impulsion 42, l'indicateur 12 ne reste pas allumé continument, mais peut moduler ou clignoter le signal lumineux rapidement, avec une périodicité inférieure (par exemple 10 fois inférieure ou 50 fois inférieure) à la période T et à la durée Δt. En général, cette modulation ou ce clignotement rapide est peu perceptible par un utilisateur et n'empêche pas ce dernier de percevoir l'indicateur 12 comme restant illuminé pendant toute la durée Δt.

Lors d'une étape S104, le terminal 14 capture une séquence d'images de l'indicateur 12 pendant sa modulation ou son clignotement, de préférence pendant une durée suffisamment longue pour assurer que le message d'identification soit capturé dans sa totalité.

Par exemple, cette capture d'images est effectuée grâce au capteur optique 30.

De préférence, le terminal 14 est capable d'échantillonner des images à une fréquence rapide, par exemple de l'ordre de 50Hz ou plus. La séquence d'images peut être un flux vidéo.

En pratique, pour capturer la séquence d'images, l'utilisateur est placé à proximité de l'appareil 4 qui émet le message d'identification et oriente son terminal 14 de manière à acquérir des images comportant l'identificateur 12, par exemple en filmant la face avant de l'appareil 4 avec le capteur 30. Les images acquises peuvent être affichées sur l'interface 16.

Ensuite, à l'étape S104, le terminal 14 décode le message d'identification à partir de la séquence d'images capturée pour extraire les données d'identification.

Par exemple, les images capturées sont ordonnées temporellement. Puis l'emplacement de l'indicateur 12 sur chacune des images acquises est identifié automatiquement et la séquence d'illumination émise au cours du temps est reconstruite puis démodulée pour extraire automatiquement le message d'identification. Les données d'identification ainsi extraites peuvent être stockées en mémoire 34 du terminal 14.

Comme exemple non limitatif les données d'identification sont transmises selon un protocole connu comme le codage Manchester. D'autres protocoles d'encodage sont toutefois possibles. Avantageusement, lors d'une étape S108, le terminal 14 peut afficher, sur l'interface 16, une liste du ou des appareils électriques identifiés à partir des données d'identification extraites. Cela permet à un utilisateur de sélectionner l'appareil 4 qui doit faire l'objet de l'appariement lorsque plusieurs appareils électriques ont été filmés en même temps que l'appareil 4.

Ensuite, le terminal 14 acquiert une sélection d'appareil sélectionné par l'utilisateur parmi la liste affichée. Par exemple, l'utilisateur sélectionne un appareil parmi la liste au moyen de l'interface 16, par exemple en interagissant avec un élément d'interface graphique affiché sur l'écran.

A l'étape S110, les données d'identification sont automatiquement transmises par le terminal 14 vers l'appareil 6. Par exemple, les données d'identification associées à l'appareil qui a été sélectionné par l'utilisateur lors de l'étape S108 sont envoyées à l'appareil 6.

Enfin, à l'étape S112, l'appareil 6 autorise l'établissement d'une liaison de communication sans fil entre le premier appareil électrique et le deuxième appareil électrique une fois qu'il a reçu les données d'identification envoyées par le terminal 14.

Par exemple, l'appareil 6 enregistre les données d'identification de l'appareil 4 dans une liste blanche (« whitelist » en anglais) pour autoriser l'établissement de la liaison 10.

En variante, les étapes du procédé présenté ci-dessus pourraient être exécutées dans un ordre différent. Certaines étapes pourraient être omises. L'exemple décrit ne fait pas obstacle à ce que, dans d'autres modes de réalisation, d'autres étapes soient mises en œuvre conjointement et/ou séquentiellement avec les étapes décrites.

Grâce à l'invention, les données d'identification du premier appareil électrique sont collectées automatiquement par l'utilisateur en capturant la modulation du signal lumineux de l'indicateur lumineux 12. L'identification de l'appareil 4 est ainsi facilitée, notamment lorsque l'appareil 4 est installé aux côtés de multiples autres appareils électriques dans un endroit confiné, tel qu'un tableau électrique ou une armoire électrique. L'identification est donc plus robuste et plus rapide à mettre en place par rapport aux cas connus où les appareils doivent être identifiés manuellement et visuellement au moyen d'étiquettes, de codes-barres ou de marquages.

Dans certains modes de réalisation, le procédé décrit ci-dessus peut en outre comporter l'échange d'identifiants cryptographiques pour sécuriser l'établissement de la liaison 10. Par exemple, le procédé peut être utilisé pour implémenter un procédé d'appariement comportant un mode d'authentification par canal auxiliaire, tel qu'un procédé d'authentification dit « out of band », par exemple tel que défini par ou compatible avec le standard Zigbee ou Bluetooth^{®}.

Selon des exemples de réalisation, les données d'identification émises à l'étape S102 par l'appareil 4 comportent une clé de liaison propre à l'appareil 4 lui-même. Ainsi, la clé de liaison est transmise par voie lumineuse grâce à l'identifiant 12.

Lors de l'étape S112, l'appareil 6 n'autorise l'établissement de la liaison de communication sans fil que si la clé de liaison est acceptée, par exemple s'il est avéré que la clé de liaison a bien été générée par l'appareil 4. Par exemple, la clé générée est comparée avec une clé publique de l'appareil 4 qui est préalablement connue de l'appareil 6.

De préférence, la clé de liaison est générée aléatoirement par l'appareil 4 après avoir reçu une demande d'appariement. Par exemple, la clé de liaison est une clé cryptographique unique générée aléatoirement par un générateur de nombres pseudo aléatoire implémenté par l'appareil 4.

Ainsi, une clé de liaison peut être régénérée par l'appareil 4 à chaque demande d'appariement, ce qui est plus sûr que d'utiliser toujours une seule et même clé de liaison préparée en usine et préenregistrée dans l'appareil 4.

Dans certains autres modes de réalisation, le procédé peut être utilisé pour transmettre au terminal 14 des données relatives à un état interne de l'appareil 4. De préférence, ces données sont transmises avec les données d'identification lors de l'étape S102. Alternativement, elles peuvent être envoyées, toujours au moyen de l'indicateur 12, après que les données d'identification aient été envoyées.

Les données relatives à l'état interne de l'appareil 4 peuvent ensuite être transmises à l'appareil 6 et/ou être affichées sur l'interface 16 à destination de l'utilisateur, de préférence en surimpression sur la séquence d'images acquises lorsque celles-ci sont également affichée sur l'interface 16.

Ces données peuvent comporter un nom de l'appareil défini par l'utilisateur, des informations de diagnostic, un code d'erreur, une adresse réseau, l'état d'une connexion de données, une ou plusieurs valeurs électriques mesurées et/ou calculées par l'appareil 4, notamment lorsque ces valeurs électriques se rapportent à l'installation dans laquelle l'appareil 4 est installé.

Les modes de réalisation et les variantes envisagés ci-dessus peuvent être combinés entre eux pour créer de nouveaux modes de réalisation.

## Revendications

1. Procédé pour apparier un premier appareil électrique (4) à un deuxième appareil électrique (6), dans lequel le premier appareil électrique (4) est un appareil de protection électrique, ou un appareil de commutation électrique, ou un appareil de mesure pour mesurer une ou plusieurs grandeurs électriques, ou un contrôleur logique programmable, le premier appareil électrique (4) comprenant un indicateur lumineux (12) adapté pour indiquer un état de fonctionnement du premier appareil électrique (4), ce procédé comportant :
• par le premier appareil électrique (4), émettre (S102) un message d'identification contenant des données d'identification, le message d'identification étant émis par modulation du signal lumineux de l'indicateur lumineux (12) ;
• par un terminal de communication mobile (14) comportant un capteur optique (30), capturer (S104) une séquence d'images de l'indicateur lumineux du premier appareil électrique pendant la modulation du signal lumineux;
• par le terminal de communication mobile (14), décoder (S104) le message d'identification à partir de la séquence d'images capturée pour extraire les données d'identification ;
• par le terminal de communication mobile (14), transmettre (S110) les données d'identification vers le deuxième appareil électrique ;
• par le deuxième appareil électrique, autoriser (S112) l'établissement d'une liaison de communication sans fil entre le premier appareil électrique et le deuxième appareil électrique.

2. Procédé selon la revendication 1, dans lequel le procédé comporte en outre des étapes consistant à :
• afficher (S108), sur le terminal de communication mobile (14), une liste du ou des appareils électriques identifiés à partir des données d'identification extraites ;
• acquérir une sélection, par un utilisateur, sur le terminal de communication mobile (14), d'un appareil électrique parmi la liste affichée, les données d'identification transmises (S110) vers le deuxième appareil électrique étant celles de l'appareil sélectionné par l'utilisateur.

3. Procédé selon l'une quelconque des revendications précédentes, dans lequel les données d'identification émises (S102) par le premier appareil électrique comportent une clé de liaison transmise par le premier appareil électrique, et dans lequel le deuxième appareil électrique n'autorise (S112) l'établissement de la liaison de communication sans fil que si la clé de liaison est acceptée.

4. Procédé selon la revendication 3, dans lequel la clé de liaison est une clé cryptographique unique générée aléatoirement par le premier appareil électrique après avoir reçu une demande d'appariement.

5. Procédé selon l'une quelconque des revendications précédentes, dans la séquence d'images est capturée (S104) par le capteur optique (30) du terminal de communication mobile (14).

6. Procédé selon l'une quelconque des revendications précédentes, dans lequel l'indicateur lumineux (12) comporte une source lumineuse, telle qu'une diode électroluminescente.

7. Procédé selon l'une quelconque des revendications précédentes, dans lequel le message d'identification émis par modulation du signal lumineux de l'indicateur lumineux (12) est émis par clignotement.

8. Procédé selon l'une quelconque des revendications précédentes, dans lequel le message d'identification émis par modulation du signal lumineux de l'indicateur lumineux (12) est émis selon un procédé de communication par lumière visible.

9. Procédé selon l'une quelconque des revendications précédentes, dans lequel le procédé comporte en outre l'émission (S102), par le premier appareil électrique (4), avec les données d'identification, de données relatives à un état interne dudit premier appareil.

10. Système pour apparier un premier appareil électrique (4) à un deuxième appareil électrique (6) au sein d'une installation électrique, ce système comportant :
• un premier appareil électrique (4) comportant un indicateur lumineux (12), le premier appareil électrique (4) étant un appareil de protection électrique, ou un appareil de commutation électrique, ou un appareil de mesure pour mesurer une ou plusieurs grandeurs électriques, ou un contrôleur logique programmable, l'indicateur lumineux étant adapté pour indiquer un était de fonctionnement dudit premier appareil électrique (4);
• un deuxième appareil électrique (6) ;
• un terminal de communication mobile (14) comportant un capteur optique (30) ;
ce système étant configuré pour mettre un procédé comportant des étapes consistant à :
• par le premier appareil électrique (4), émettre (S102) un message d'identification contenant des données d'identification, le message d'identification étant émis par modulation du signal lumineux de l'indicateur lumineux (12) ;
• par le terminal de communication mobile (14), capturer (S104) une séquence d'images de l'indicateur lumineux du premier appareil électrique pendant sa modulation du signal lumineux ;
• par le terminal de communication mobile (14), décoder (S104) le message d'identification à partir de la séquence d'images capturée pour extraire les données d'identification ;
• par le terminal de communication mobile (14), transmettre (S110) les données d'identification vers le deuxième appareil électrique ;
• par le deuxième appareil électrique, autoriser (S112) l'établissement d'une liaison de communication sans fil entre le premier appareil électrique et le deuxième appareil électrique.

## Patentansprüche

1. Verfahren zum Paaren eines ersten elektrischen Geräts (4) mit einem zweiten elektrischen Gerät (6), wobei das erste elektrische Gerät (4) ein elektrisches Schutzgerät oder ein elektrisches Schaltgerät oder ein Messgerät zum Messen einer oder mehrerer elektrischer Größen oder eine programmierbare logische Steuerung ist, das erste elektrische Gerät (4) umfassend eine Leuchtanzeige (12), die angepasst ist, um einen Betriebszustand des ersten elektrischen Geräts (4) anzuzeigen, das Verfahren umfassend:
• durch das erste elektrische Gerät (4), Emittieren einer Identifizierungsnachricht (S102), die Identifizierungsdaten enthält, wobei die Identifizierungsnachricht durch Modulation des Lichtsignals der Leuchtanzeige (12) emittiert wird;
• durch ein mobiles Kommunikationsendgerät (14) umfassend einen optischen Sensor (30), Erfassen (S104) einer Bildsequenz der Leuchtanzeige des ersten elektrischen Geräts während der Modulation des Lichtsignals;
• durch das mobile Kommunikationsendgerät (14), Dekodieren (S104) der Identifizierungsnachricht anhand der erfassten Bildsequenz, um die Identifizierungsdaten zu extrahieren;
• durch das mobile Kommunikationsendgerät (14), Übertragen (S110) der Identifizierungsdaten an das zweite elektrische Gerät;
• durch das zweite elektrische Gerät, Genehmigen (S112) des Aufbauens einer drahtlosen Kommunikationsverbindung zwischen dem ersten elektrischen Gerät und dem zweiten elektrischen Gerät.

2. Verfahren nach Anspruch 1, wobei das Verfahren ferner die folgenden Schritte umfasst:
• Anzeigen (S108), auf dem mobilen Kommunikationsendgerät (14), einer Liste des/der identifizierten elektrischen Geräte anhand der extrahierten Identifizierungsdaten;
• Erfassen einer Auswahl, durch einen Benutzer, auf dem mobilen Kommunikationsendgerät (14), eines elektrischen Geräts aus der angezeigten Liste, wobei die Identifizierungsdaten, die an das zweite elektrische Gerät übertragen (S110) werden, jene des Geräts sind, das von dem Benutzer ausgewählt wird.

3. Verfahren nach einem der vorherigen Ansprüche, wobei die von dem ersten elektrischen Gerät emittierten Identifizierungsdaten (S102) einen Verbindungsschlüssel umfassen, der von dem ersten Gerät übertragen wird, und wobei das zweite elektrische Gerät das Aufbauen der drahtlosen Kommunikationsverbindung nur dann genehmigt (S112), wenn der Verbindungsschlüssel akzeptiert wird.

4. Verfahren nach Anspruch 3, wobei der Verbindungsschlüssel ein eindeutiger kryptografischer Schlüssel ist, der von dem ersten elektrischen Gerät nach Empfangen einer Paarungsanfrage zufällig erzeugt wird.

5. Verfahren nach einem der vorherigen Ansprüche, wobei die Bildsequenz durch den optischen Sensor (30) des mobilen Kommunikationsendgeräts (14) erfasst (S104) wird.

6. Verfahren nach einem der vorherigen Ansprüche, bei die Leuchtanzeige (12) eine Lichtquelle, wie beispielsweise eine Leuchtdiode umfasst.

7. Verfahren nach einem der vorherigen Ansprüche, wobei die durch Modulation des Lichtsignals der Leuchtanzeige (12) erzeugte Identifizierungsnachricht durch Blinken emittiert wird.

8. Verfahren nach einem der vorherigen Ansprüche, wobei die durch Modulation des Lichtsignals der Leuchtanzeige (12) emittierte Identifizierungsnachricht gemäß einem Kommunikationsverfahren durch sichtbares Licht emittiert wird.

9. Verfahren nach einem der vorherigen Ansprüche, wobei das Verfahren ferner die Emission (S102), durch das erste elektrische Gerät (4) mit den Identifizierungsdaten, von Daten in Bezug auf einen internen Zustand des ersten Geräts umfasst.

10. System zum Koppeln eines ersten elektrischen Geräts (4) mit einem zweiten elektrischen Gerät (6) innerhalb einer elektrischen Anlage, das System umfassend:
• ein erstes elektrisches Gerät (4), umfassend eine Leuchtanzeige (12), wobei das erste elektrische Gerät (4) ein elektrisches Schutzgerät oder ein elektrisches Schaltgerät oder ein Messgerät zum Messen einer oder mehrerer elektrischer Größen oder eine programmierbare logische Steuerung ist, wobei die Leuchtanzeige angepasst ist, um einen Betriebszustand des ersten elektrischen Geräts (4) anzuzeigen;
• ein zweites elektrisches Gerät (6);
• ein mobiles Kommunikationsendgerät (14), umfassend einen optischen Sensor (30);
wobei dieses System konfiguriert ist, um ein Verfahren zu implementieren, umfassend Schritte, die aus Folgendem bestehen:
• durch das erste elektrische Gerät (4), Emittieren (S102) einer Identifizierungsnachricht, die Identifizierungsdaten enthält, wobei die Identifizierungsnachricht durch Modulation des Lichtsignals der Leuchtanzeige (12) emittiert wird;
• durch das mobile Kommunikationsendgerät (14), Erfassen (S104) einer Bildsequenz der Leuchtanzeige des ersten elektrischen Geräts während der Modulation des Lichtsignals;
• durch das mobile Kommunikationsendgerät (14), Dekodieren (S104) der Identifizierungsnachricht anhand der erfassten Bildsequenz, um die Identifizierungsdaten zu extrahieren;
• durch das mobile Kommunikationsendgerät (14), Übertragen (S110) der Identifizierungsdaten an das zweite elektrische Gerät;
• durch das zweite elektrische Gerät, Genehmigen (S112) des Aufbauens einer drahtlosen Kommunikationsverbindung zwischen dem ersten elektrischen Gerät und dem zweiten elektrischen Gerät.

## Claims

1. Method for pairing a first electrical device (4) with a second electrical device (6), wherein the first electrical device (4) is an electrical protection device or an electrical switching device or a measuring device for measuring one or more electrical quantities or a programmable logic controller, the first electrical device (4) including a light indicator (12) suitable for indicating an operating state of the first electrical device (4), the method comprising:
• by the first electrical device (4), emitting (S102) an identification message containing identification data, the identification message being emitted by modulation of the light signal of the light indicator (12);
• by a mobile communication terminal (14) comprising an optical sensor (30), capturing (S104) a sequence of images of the light indicator of the first electrical device during the modulation of the light signal;
• by the mobile communication terminal (14), decoding (S104) the identification message from the captured image sequence to extract the identification data;
• by the mobile communication terminal (14), transmitting (S110) the identification data to the second electrical device;
• by the second electrical device, authorising (S112) the establishment of a wireless communication link between the first electrical device and the second electrical device.

2. Method according to claim 1, wherein the method further comprises the steps of:
• displaying (S108), on the mobile communication terminal (14), a list of the electrical device or devices identified from the extracted identification data;
• acquiring a selection, by a user, on the mobile communication terminal (14), of an electrical device from the displayed list, the identification data transmitted (S110) to the second electrical device being those of the device selected by the user.

3. Method according to any one of the preceding claims, wherein the identification data emitted (S102) by the first electrical device comprises a pairing key transmitted by the first electrical device, and wherein the second electrical device authorises (S112) the establishment of the wireless communication link only if the pairing key is accepted.

4. Method according to claim 3, wherein the pairing key is a unique cryptographic key randomly generated by the first electrical device after receiving a pairing request.

5. Method according to any one of the preceding claims, wherein the image sequence is captured (S104) by the optical sensor (30) of the mobile communication terminal (14).

6. Method according to any one of the preceding claims, wherein the light indicator (12) comprises a light source, such as a light-emitting diode.

7. Method according to any one of the preceding claims, wherein the identification message emitted by modulation of the light signal of the light indicator (12) is emitted by blinking.

8. Method according to any one of the preceding claims, wherein the identification message emitted by modulation of the light signal of the light indicator (12) is transmitted using a visible light communication method.

9. Method according to any one of the preceding claims, wherein the method further comprises the emission (S102), by the first electrical device (4), together with the identification data, of data relating to an internal state of said first device.

10. System for pairing a first electrical device (4) with a second electrical device (6) within an electrical installation, the system comprising:
• a first electrical device (4) comprising a light indicator (12), the first electrical device (4) being an electrical protection device, or an electrical switching device, or a measuring device for measuring one or more electrical quantities, or a programmable logic controller, the light indicator being configured to indicate an operating state of said first electrical device (4);
• a second electrical device (6);
• a mobile communication terminal (14) comprising an optical sensor (30);
the system being configured to implement a method comprising the steps of:
• by the first electrical device (4), emitting (S102) an identification message containing identification data, the identification message being emitted by modulation of the light signal of the light indicator (12);
• by the mobile communication terminal (14), capturing (S104) a sequence of images of the light indicator of the first electrical device during modulation of its light signal;
• by the mobile communication terminal (14), decoding (S104) the identification message from the captured image sequence to extract the identification data;
• by the mobile communication terminal (14), transmitting (S110) the identification data to the second electrical device;
• by the second electrical device, authorising (S112) the establishment of a wireless communication link between the first electrical device and the second electrical device.
